# EUROPEAN PATENT SPECIFICATION

(11) **EP 3 770 006 B1**
(45) Date of publication and mention of the grant of the patent: **04.10.2023**
(21) Application number: 19188382.6
(22) Date of filing: 25.07.2019
(51) Int. Cl.: B60L 53/16, B60L 53/302

(54) **ELECTRICAL VEHICLE CHARGING SYSTEM FOR CHARGING AN ELECTRICAL VEHICLE**
ELEKTROFAHRZEUGLADESYSTEM ZUM LADEN EINES ELEKTROFAHRZEUGS
SYSTÈME DE CHARGEMENT DE VÉHICULE ÉLECTRIQUE POUR CHARGER UN VÉHICULE ÉLECTRIQUE

(43) Date of publication of application: 27.01.2021
(73) Proprietor: ABB E-mobility B.V., 2629 JG Delft (NL)
(72) Inventor: Garcia-Ferre, Francisco, 5400 Baden (CH); Boehm, Moritz, 5507 Mellingen, Aargau (CH); Hemrle, Jaroslav, 5405 Baden-Dättwil (CH); Bortolato, Matteo, 35010 Trebaseleghe (PD) (IT); Logakis, Emmanuel, 5405 Baden-Dättwil (CH); Oppliger, Jean-Marc, 5442 Fislisbach (CH)
(74) Representative: Maiwald GmbH

(56) References cited:
- WO-A1-2017/133893
- US-A1- 2019 217 730

## Description

### Technical Field

The invention relates to an electrical plug connector for charging of electric vehicles, comprising a connector housing, a mating interface structure supported and positioned within the connector housing, a positive contact pin for connection with a positive conductor of a charging cable and a negative contact pin for connection with a negative conductor of the charging cable. The invention further relates to a method for assembling such a connector.

### Background Art

In response to global warming and pollution challenges, the automotive industry is accelerating the development and commercialization of electric vehicles. This trend has a high visibility and acceptance among end-customers. The business of electric vehicle charging infrastructure (EVCI) is therefore growing rapidly as well and there is currently a compelling need to support the automotive industry while ensuring - above all- safety, but also efficiency and performance.

At present, the EVCI products rely on connectors provided by a number of suppliers. Depending on the ratings (which in turn determine the charging speed for a given battery), the connectors may require either non-cooled or cooled cable systems. The connectors available in the market are based on well-known technologies (i.e. electrical contact solutions, ca-bling, etc.), but the application is rather new. As a matter of fact, the EVCI connector technology is at an early stage, and the connectors offered by suppliers are still first or second generation designs. The field-experience with this kind of devices is limited. Reasonable feedback on design, functionality, implementation, and operating performance is becoming available to engineers and designers just now. The available standards for EVCI applications are also at an early stage, and are currently rather weak and/or incomplete. A drawback of prior art liquid cooled charging connectors is an insufficient thermal performance of the cooling system.

Recent field service activities have shed light on a number of issues with the products installed in the field. Those issues have a relevant impact on safety and reliability, and must be addressed properly in order to protect end-users and our business, as well.

One major issues is the poor dielectric design of most known arrangements of the connector interface. The safety of the EVCI connectors largely depends on the dielectric design. Most suppliers currently offer poor dielectric design. For example, some connector have a single insulation concept, in which the creepage distance is small (i.e. 16 mm), and in which there are screws in between the contact pins / DC poles of the connector. Moreover, the mating interface is not exchangeable. Such a design may lead to undesired flashovers through the screws in between the DC poles, with unacceptably high risks for end-users. This kind of issue was observed in a case in Norway in early 2019.

Other known connectors have a better (yet still not totally acceptable) dielectric design, for example comprising a double insulation and a set of contacts inside the connector body that is not exchangeable. Such connector also may have an exchangeable interface containing another set of contacts. The latter are replaced together with the interface upon damage of the part. The resulting creepage distance is 47 mm in the exchangeable interface and 61 mm in the non-exchangeable interface. Such a connector is better compared to the previously described connector in terms of dielectric strength and exchangeability of the mating interface. On the other hand, it contains a double set of contacts, and the solution is therefore more expensive. Moreover, it still contains screws close to the live parts (specifically, in between the DC poles).

Another major issue is of known arrangements is a poor monitoring of the temperature of the contact materials. Ideally, the temperature of the contact materials during charging should be measured directly on the live parts. Because this is difficult to achieve, suppliers rely on alternative solutions which are easier to implement. Some of those solutions are: (i) placing thermocouples on the cables close to the crimping of the contact material with the cable conductor; (ii) applying thermistors on the non-exchangeable live parts inside the connector body; (iii) using a single thermocouple between DC poles. None of these options provides an accurate and reliable measurement of the temperature of the contact materials.

WO 2017/133893 A1 describes a cable assembly with a connector comprising a mechanical guard that at least partially surrounds an electric and/or fluidic contact to be interconnected with a mating corresponding connector. An electric contact may e.g. be a connecting pin, such as a fast DC charging pin or an AC charging pin.

### Summary of invention

It is therefore an object of the invention to provide a charging connector for charging an electrical vehicle that overcomes the drawbacks explained before, in particular to provide a charging connector which addresses to the dielectric design and the exchangeability of the mating interface and to accuracy of the temperature monitoring system.

The object of the invention is solved by the features of the independent claims. Preferred embodiments are detailed in the dependent claims.

Thus, with regard to a device the object is solved by an electrical plug connector for charging of electric vehicles, comprising
a connector housing,
a mating interface structure supported and positioned within the connector housing,
a positive contact pin for connection with a positive conductor of a charging cable and a negative contact pin for connection with a negative conductor of the charging cable, and
a contact pin insert supporting the positive contact pin and/or the negative contact pin, wherein
the positive contact pin and/or the negative contact pin are/is received and secured in position by the contact pin insert, and wherein
the contact pin insert is received within the mating interface structure.

With regard to a method the object is solved by a method for assembling an electrical plug connector, in particular an electrical plug connector as described before, wherein in a first step a contact pin for connection with a conductor of a charging cable is inserted into a contact pin insert for supporting the contact pin and is secured in position by the contact pin insert, wherein
in a following step the contact pin insert with the contact pin supported and secured in position therein is inserted into the mating interface structure, and wherein
in further following step the mating interface structure with the contact pin insert and the contact pin is inserted into a connector housing, such that the mating interface structure supported and positioned within the connector housing.

One can say that one concept of the invention to solve the problem of an insufficient dielectric design of the prior art is to avoid using screws anywhere close to the live parts of the connector, and especially to avoid screws between the DC contacts. Therefore, the invention provides a new concept regarding the connector housing, which may not completely house the other elements of the connector but may be provided in form of a connector body, the mating interface, cable connections and the contact pins. The further provides a new concept regarding a locking of the contact pins and a locking of the mating interface with the connector body, wherein the term locking essentially is to be understood with the meaning of securing in position. The invention provides a smart arrangement of the mating interface / connector interface, enabling a robust dielectric design and in certain embodiments an improved temperature monitoring.

A main advantage of the invention is that the contact pins are secured in position relative to the mating interface without the need to use screws or similar metal fastening means, thereby providing an enhanced dielectric design and in particular a very large creepage distance. Further, the connector according to the invention is very easy to assemble, wherein at the same time an assembly as intended is guaranteed. The contact pins preferably are finger like formed, e.g. cylindrical or hollow-cylindrical, such that they have a longitudinal axis. The contact pin inserts preferably are hollow sleeves, which provide a stop for the contact pins in the insert direction in the longitudinal axis, thereby defining the intended position of the contact pin in the contact pin insert.

The concept of the invention provides a mating interface, which optionally may be exchangeable, a contact pin insert, also referred to as a DC insert, two contact pins (i.e. a positive contact pin and a negative contact pin), also referred to as DC pins, and optionally a contact pin blocker, also referred to as a DC blocker. It should be noted that the invention is suited for non-cooled as well as for liquid-cooled or non-liquid-cooled connectors and/or charging cables. The connector in particular provides a plug-in-connection with a charging receptacle of an electric vehicle and comprises an opening for connection with a charging cable.

According to the invention, the whole assembly consisting of the mating interface, the contact pin or several contact pins, the contact pin insert or several contact pin inserts and optionally a contact pin blocking element or several contact pin blocking elements is fixed to the connector housing /connector body. When combined with the connector housing / connector body, the inserts and optionally the blocking elements are locked and secured in position, in particular by an abutment onto the connector housing / connector body, and no motion of the said entities relative to the housing / body is possible. Specifically, forces along the direction of the central axis of the contact pins are passed over the contact pin insert into the mating interface and/or the connector housing / connector body, hindering any motion of the contact pins when the connector is mated with a car, or when it is extracted.

It is an essential advantage of the invention that the creepage distance can be designed very large, and for example can be as high as 137,5 mm, or more. A further advantage is, that the connector according to the invention does not require any screws or similar metal holding means, in particular in between the DC poles, nor close to the live parts to connect and mount the different parts of the connector.

While the contact pins consist of an electrically conductive material, as metal, in particular copper, the contact pin insert and/or the mating interface and/or the connector housing preferably consists/ consist of an electrically insulating material, as plastic. Said parts preferably are plastic blow molded parts. By providing those parts of insulating material, the invention advantageously achieves a double insulating feature, thus enhancing the dielectric properties of the connector.

According to an implementation, the contact pin insert is secured in position within the mating interface by an abutment with the connector housing. This provides a very simple, effective solution for a secure positioning with a defined relation to the connector housing. Further, this implementation is very easy to assemble. In particular, the mating interface can comprise a mating structure, which positions the mating interface in a defined position within the connector housing / connector body. Further, the connector housing / connector body may comprise a mating structure against which the contact pin insert abuts, such that it is secured in position relative to the mating interface. The mating structure for the mating interface and the connector housing in particular may be a tongue and groove structure, whereas the mating structure of the contact pin insert and the connector housing may be a stop or shoulder or similar structure.

According to a further implementation, the contact pin insert is secured in position within the mating interface by a tongue and groove joint, which tongue and groove joint preferably is established directly in the contact pin insert and the mating interface. Preferably, the axis of the tongue and groove joint extends into the longitudinal direction of the contact pin insert and/or into the direction of assembly, when the contact pin insert is inserted into the mating interface, such that assembly is very easy.

According to a further implementation, the positive contact pin and/or the negative contact pin are secured in positon within the contact pin insert by a press fit and/or gluing and/or a snap fit connection and/or a bayonet coupling. Preferably, the positive contact pin and/or the negative contact pin are secured in positon within the contact pin insert by a contact pin blocking element, which locks the contact pin in position. Specifically, the contact pin blocking element can bear forces along the direction of the central axis of the contact pins, hindering motion when the connector is mated with a car, or when it is extracted.

According to a further implementation, the positive contact pin and/or the negative contact pin are secured in positon within the contact pin insert by a bayonet coupling that provides a coupling-decoupling function by rotating the contact pin relative to the contact pin insert between a coupled position and a decoupled position, wherein the contact pin blocking element mates with the bayonet coupling in the coupled position such that a rotation in the decoupled position is locked.

The contact pin blocking element may comprise a reception for a thermocouple allowing abutment of the thermocouple with the contact pin.

Further, the contact pin insert, the positive contact pin and the negative contact pin each may comprise a mating structure ensuring that the positive contact pin and the negative contact pin cannot be confused and have to be assembled with the contact pin insert in the intended position.

According to a further implementation, the mating interface and the contact pin insert each comprise a mating structure ensuring that the contact pin insert has to be assembled with the mating insert in the intended position, such that the positive contact pin and the negative contact pin have to be arranged in the intended position.

According to a further implementation, the mating interface is reinforced by a reinforcing insert or a stiffening insert, in particular by a metal insert or steel insert. For example, the mating interface may include a space / receptacle / seat for incorporating the stiffening insert. The insert can be pressed and/or glued into the mating interface and serves to increase damage resistance of the connector and the mating interface during use and handling and in particular when used in a non-intended manner. The insert especially may help retaining structural integrity and protecting of the live parts of the connector from damage upon mechanical abuse of the interface.

The positive contact pin and/or the negative contact pin may be crimped and/or welded or soldered to a positive conductor of the charging cable and a negative conductor of a charging cable, respectively. Additionally or alternatively, the conductors of the charging cable may be connected to the concerning contact pins by a push-in mechanism, by screwing and/or by welding or soldering or brazing and/or by gluing.

According to a further implementation, the positive contact pins and/or the negative contact pin comprise/comprises a low-friction Ag-graphite composite coating.

According to a further implementation, the positive contact pin and/or the negative contact pin comprises/comprise pockets for thermocouples, pockets for contact springs close to tips of the concerning contact pin and/or stress relief openings at joints between different contact pins and/or cooling channels for receiving a coolant fluid from the charging cable. In particular, the blocking elements may comprise a pocket for receiving ceramic-coated thermocouples. Preferably, the blocking elements may comprise two pockets for such thermocouples, one for the positive contact pin and one for the negative contact pin. In this manner the thermocouples can be positioned in direct contact with the contact pins, in particular on their respective back side. Alternatively or additionally, a pocket for receiving the thermocouples may be included in the contact pins, and the thermocouple may be inserted from the side.

According to a preferred implementation, the connector additionally comprises a control pin (in particular two control pins), a control insert, and a control blocking element. Further, the connector optionally comprises a grounding pin and a control blocking element. The assembly of such control pin, control insert, control blocking element, grounding pin and control blocking element according to the invention is realized in the manner as described and disclosed with regard to the contact pin, the contact pin insert, the mating interface and optionally the contact pin blocking element. Therefore, any reference of this disclosure regarding a contact pin also refers to a control pin and/or a grounding pin. Further, any reference of this disclosure regarding a contact pin insert also refers to a control pin insert and/or a grounding pin insert. Further, any reference of this disclosure regarding a contact pin blocking element also refers to a control pin blocking element and/or a grounding pin blocking element.

In a further implementation, the blocking elements can be replaced by a "clicking" mechanism, which will have the same function -namely, keeping the contact pins in place. In such case, another blocking element may be anyhow provided for positioning and holding of thermocouples.

According to a further implementation, the blocking element may contain features for centering the contact pin insert and the blocking element. Similar features can be added to center the cables to the blocking element.

The shape of the blocking element may be adapted to and designed in a combinable manner with the shape of the contact pins. This may avoid any possible mistake when assembling the cables, which means that the positive contact pin (DC+) and the negative contact pin (DC-) cannot be confused. The same may apply according to a further implementation to the control pin insert. In particular, the contact pins may be symmetrically formed and/or have slightly different in dimensions. The result of such a design is that it is impossible to insert the contact pins in another way than intended and/or that a rotation of the concerning contact pin relative to the contact pin insert is impossible if the wrong pin is used or if a contact pin is used / assembled different than intended. A further embodiment of the invention is to have the contact pin insert with different dimensions, for example with two slightly different hole diameters, for each contact pin / DC+ and DC- poles.

The insulating casing particularly may be injection molded. It may be designed monolithically or it may consist of a plurality of distinct casing parts that are assembled to provide the connector housing. The insulating housing may be assembled with the other parts of the connector, in particular with its conducting parts as for example the first and/or the second connecting elements and/or the contacts. Alternatively, the insulating casing can be cast around or molded around the first connector element and/or the second connector element.

According to one implementation the contact pins are essentially finger-shaped. They may including stress relief features, or they can also be hollow cylinders including pockets for contact springs.

According to a further implementation, the contact pins comprise a low-friction plating. Such a plating for example may be an Ag-graphite composite. Due to a decreased friction during plug-in and plug-out procedures, the lifetime of the connector can be advantageously increased, such that in result an operating lifetime approaching or exceeding 100.000 mating cycles can be achieved. The contact pins in particular are processed by machining and/or 3D printing. Preferably they consist essentially of a copper alloy material, in particular of a CuCrZr-material or a CuBe-material.

The contacts may comprise pockets for thermocouples, pockets for contact springs close to tips of the contacts and/or stress relief openings at joints between different contacts and/or cooling channels connected to the fluid channels. The connecting elements may be directly or indirectly connected with the contact. Alternatively, the contacts and the connecting elements may be monolithically formed, in particular as a single block of copper.

To complete the assembly according to an implementation of the method of the invention, the contact pins are slide in the contact pin insert. Afterwards, when in the correct position, for example at the bottom of the insert, they are rotated, preferably around their longitudinal axis. At that point, it is no longer possible to slide the contact pin out of the contact pin insert due to the interlocking feature of the contact pin and the insert (i.e. a rotation is needed first). The blocking element may not only block movements along the axis of the contact pin, but also rotational movements around this axis. This feature is not always required, for example, when the contact pins may have different shapes and/or a rotationally asymmetric shape. In particular, depending on the cable concept implemented, the geometries of the pins may be adapted within the present invention.

The assembly of the connector may be done by sliding the contact pins into the contact pin inserts, and then sliding in the corresponding blocking elements. The latter may also have centering features for the cables. A double insulation may be achieved by using either sealings on both ends, or by potting the empty volume with an insulation material, for example silicone resin, silicone or soft epoxy, to guarantee insulation.

Further embodiments and advantages of the method are directly and unambiguously derived by the person skilled in the art from the system as described before.

### Brief description of drawings

These and other aspects of the invention will be apparent from and elucidated with reference to the embodiments described hereinafter.

In the drawings:
Fig. 1 shows an explosion perspective view of an embodiment of a connector according to the invention.
Fig. 2 shows a contact pins for an embodiment of the invention.
Fig. 3 shows the contact pin of fig. 4 with a blocking element for an embodiment of the invention.
Fig. 4 shows a further embodiment of a part of a connector of the invention in a sectional view and in an assembled state.
Fig. 5 shows a blocking element for a connector of the invention in a perspective view.
Fig. 6 shows an embodiment of a contact pin insert and a mating interface for the invention with a mating structure in a perspective view.
Fig. 7 shows another embodiment of a contact pin insert and a mating interface for the invention with a mating structure in a perspective view.
Fig. 8 shows another embodiment of a contact pin insert for the invention with a mating structure in top view.

### Description of embodiments

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite artide "a" or "an" does not exclude a plurality. The mere fact that certain measures are recited in mutually different dependent claims does not indicate that a combination of these measures cannot be used to advantage. Any reference signs in the claims should not be construed as limiting scope.

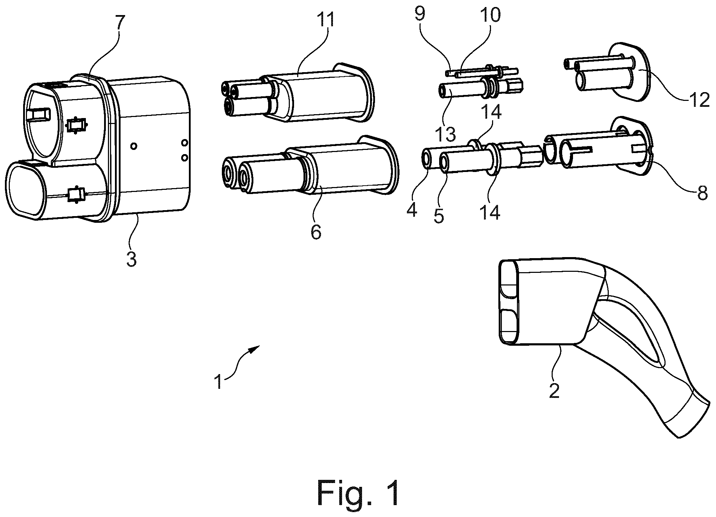

Fig. 1 shows an embodiment of an electrical plug connector 1 according to the invention in an explosion perspective view. The electrical plug connector 1 is suitable and intended for charging of electric vehicles (not shown). It comprises a connector housing 2, a mating interface structure 3 supported and positioned within the connector housing 2, a positive contact pin 4 for connection with a positive conductor (not shown) of a charging cable (not shown) and a negative contact pin 5 for connection with a negative conductor (not shown) of the charging cable.

The connector further comprises a contact pin insert 6 for supporting the positive contact pin 4 and the negative contact pin 5. The positive contact pin 4 and the negative contact pin 5 are received and secured in position by the contact pin insert 6. Further, the contact pin insert 6 is received within the mating interface structure 3. The contact pin insert 6 is secured in position within the mating interface structure 3 by an abutment in form of a tongue and groove joint with the connector housing. This joint comprises a tongue 7, which enters into a groove (not shown) of the connector housing 2.

The positive contact pin 4 and the negative contact pin 5 are secured in positon within the contact pin insert 6 by a contact pin blocking element 8, which locks the contact pins 4, 5 in position.

The connector 1 additionally comprises a two control pins 9, 10, a control insert 11, and a control blocking element 12. Further, the connector 1 comprises a grounding pin 13. The control blocking element 12 secures the assembly of the control pins 9, 10, the control insert 11 and the grounding pin 13 in the manner as described and disclosed with regard to the contact pins 4, 5, the contact pin insert 6, the mating interface 3 and the contact pin blocking element 8. The positive contact pin 4 and the negative contact pin 5 each comprises a low-friction Ag-graphite composite coating (not shown).

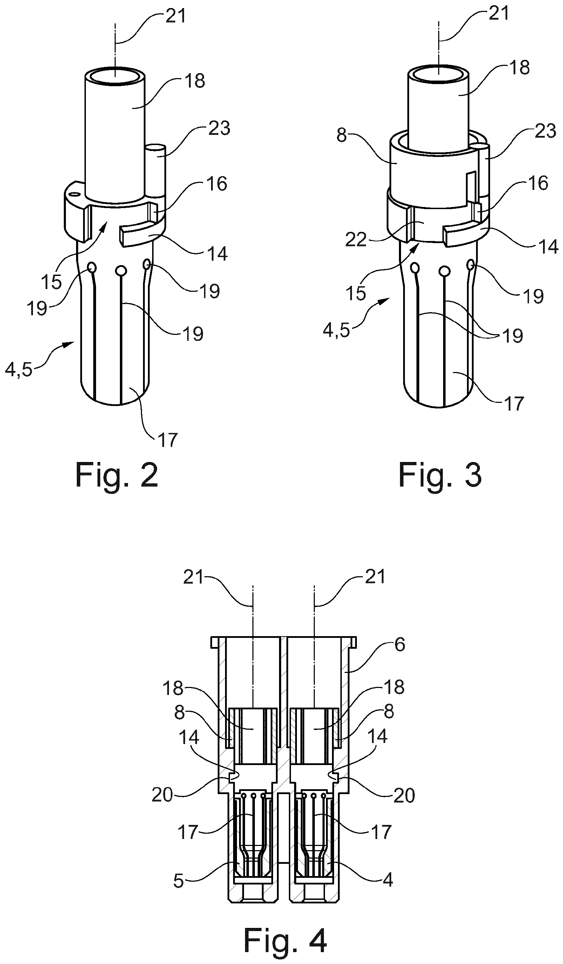

As especially is shown in figs. 2 and 3, the positive contact pin 4 and the negative contact pin 5 are secured in positon within the contact pin insert 6 by a bayonet coupling that provides a coupling-decoupling function by rotating the concerning contact pin 4, 5 relative to the contact pin insert 6 between a coupled position and an uncoupled position. The bayonet coupling here consists of a circumferentially arranged shoulder 14 extending radially from the contact pin 4, 5. This shoulder 14 has a through hole 15 and a stop 16. Further, as it is shown in figs. 2 and 3, the contact pins 4, 5 each comprise a plug connecting portion 17 and a cable connecting portion 18. The plug connecting portion 17 comprises stress relief features 19. The shoulder 14 of the contact pins 4, 5 cooperate with correspondingly formed stopper structure or groove 20 of the contact pin insert 6 (see fig. 4). When sliding the contact pin 4, 5 into the contact pin insert 6, this groove 20 passes the through hole 15 of the shoulder 14. When in the intended axial position, the shoulder 14 is in the same axial position as the groove 20. By turning the contact pin 4, 5 around his longitudinal axis 21, the shoulder 14 enters into the groove 20, as shown in fig. 4. In this position the contact pin blocking element 8 is axially inserted into the contact pin insert 6, wherein a protrusion 22 of the contact pin blocking element 8 enters into and passes the through hole 15. The contact pin blocking element 8 mates with the shoulder 14 of the bayonet coupling in the coupled position (see fig. 3) such that a rotation of the contact pin 4, 5 in the contact pin insert 6 out of the coupled position into the decoupled position is locked. Further, the contact pin blocking element 8 comprises a reception for a thermocouple 23 allowing abutment of the thermocouple 23 with the contact pin 4, 5.

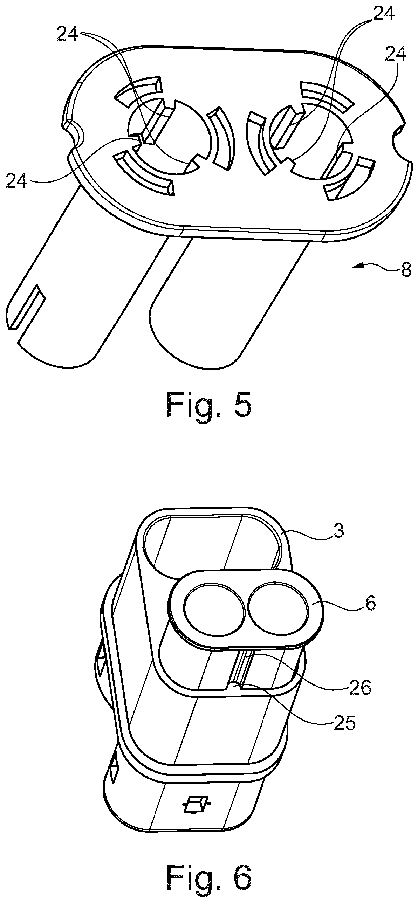

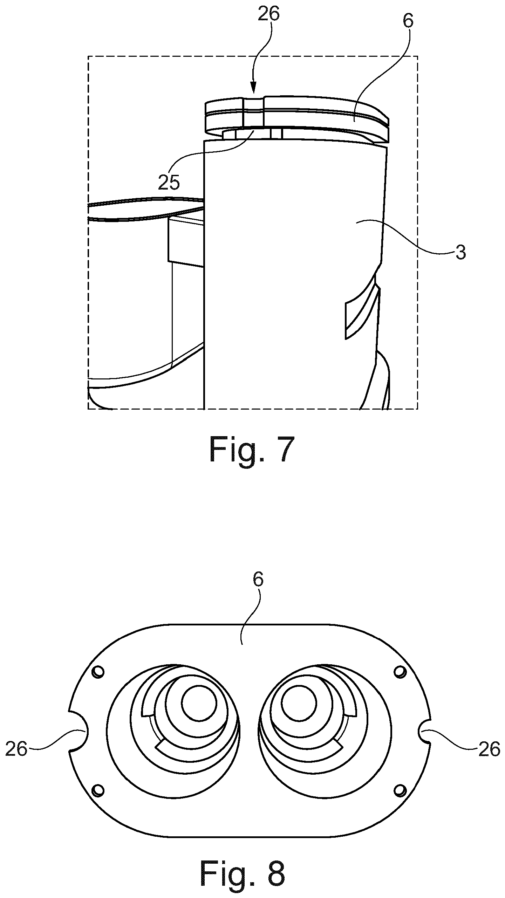

As especially shown in figs. 5, 6 and 7, the contact pin insert 6, the positive contact pin 4 and the negative contact pin 5 each comprise a mating structure 24 in form of rips 24 (the mating structures of the contact pins 4, 5 are not shown) ensuring that the positive contact pin 4 and the negative contact pin 5 cannot be confused and have to be assembled with the contact pin insert 6 in the intended position, as the mating structure 24 for / of the positive contact pin 4 differs from that for / of the negative contact pin 5. Additionally, the mating interface 3 and the contact pin insert 6 each comprise a mating structure 25 and 26, respectively. These mating structures 25, 26 ensure that the contact pin insert 6 has to be assembled with the mating insert 3 in the intended position, such that the positive contact pin 4 and the negative contact pin 5 have to be arranged in the intended position. In the example of fig. 6 the mating structure 25 of the mating interface 3 is a protrusion 25 extending on an inner wall, while the mating structure 26 is a correspondingly formed groove 26 on the outside of the contact pin insert 6. In the example of fig. 7 the mating structure 25 of the mating interface 3 is a protrusion 24 arranged on the top of the mating interface, while the mating structure 26 is a correspondingly formed groove 26 on the outside of the contact pin insert 6 (see also fig. 8). Fig. 8 shows that the contact pin insert 6 comprises one groove 26 on each side, wherein the grooves 26 are of different size, to prohibit an assembly in an unintended manner.

The mating interface 3 is reinforced by a reinforcing insert, in particular by a metal insert or steel insert.

### Reference signs list

- 1: electrical plug connector, charging connector
- 2: connector housing, connector body
- 3: mating interface structure, mating interface
- 4: positive contact pin
- 5: negative contact pin
- 6: contact pin insert
- 7: abutment, tongue
- 8: contact pin blocking element
- 9: control pin
- 10: control pin
- 11: control insert
- 12: control blocking element
- 13: grounding pin
- 14: shoulder
- 15: through hole
- 16: stop
- 17: plug connecting portion
- 18: cable connecting portion
- 19: stress relief features
- 20: stopper structure, groove
- 21: longitudinal axis
- 22: protrusion
- 23: thermocouple
- 24: mating structure, rips
- 25: mating structure, protrusion
- 26: mating structure, groove

## Claims

1. Electrical plug connector (1) for charging of electric vehicles, comprising
a connector housing (2),
a mating interface structure (3) supported and positioned within the connector housing (2),
a positive contact pin (4) for connection with a positive conductor of a charging cable and a negative contact pin (5) for connection with a negative conductor of the charging cable,
and a contact pin insert (6) supporting the positive contact pin (4) and/or the negative contact pin (5),
wherein the positive contact pin (4) and/or the negative contact pin (5) are/is received and secured in position by the contact pin insert (6), and
wherein the contact pin insert (6) is received within the mating interface structure (3).

2. Electrical plug connector (1) according to the previous claim, whereby the contact pin insert (6) is secured in position within the mating interface (3) by an abutment (7) with the connector housing (2).

3. Electrical plug connector (1) according to any of the previous claims, whereby the contact pin insert (6) is secured in position within the mating interface (3) by a tongue (7) and groove joint, which tongue (7) and groove joint is established directly in the contact pin insert (6) and the mating interface (3).

4. Electrical plug connector (1) according to any of the previous claims, whereby the positive contact pin (4) and/or the negative contact pin (5) are secured in positon within the contact pin insert (6) by a press fit and/or gluing and/or a snap fit connection and/or a bayonet coupling.

5. Electrical plug connector (1) according to any of the previous claims, whereby the positive contact pin (4) and/or the negative contact pin (5) are secured in positon within the contact pin insert (6) by a contact pin blocking element (8), which locks the contact pin (4, 5) in position.

6. Electrical plug connector (1) according to the previous claim, whereby the positive contact pin (4) and/or the negative contact pin (5) are secured in positon within the contact pin insert (6) by a bayonet coupling (14, 15, 16) that provides a coupling-decoupling function by rotating the contact pin (4, 5) relative to the contact pin insert (6) between a coupled position and a decoupled position, wherein the contact pin blocking element (8) mates with the bayonet coupling (14, 15, 16) in the coupled position such that a rotation in the decoupled position is locked.

7. Electrical plug connector (1) according to claim 5 or 6, whereby the contact pin blocking element (8) comprises a reception for a thermocouple (23) allowing abutment of the thermocouple (23) with the contact pin (4, 5).

8. Electrical plug connector (1) according to any of the previous claims, whereby the contact pin insert (6), the positive contact pin (4) and the negative contact pin (5) each comprise a mating structure (24) ensuring that the positive contact pin (4) and the negative contact pin (5) cannot be confused and have to be assembled with the contact pin insert (6) in the intended position.

9. Electrical plug connector (1) according to any of the previous claims, whereby the mating interface (3) and the contact pin insert (6) each comprise a mating structure (25, 26) ensuring that the contact pin insert (6) has to be assembled with the mating insert (3) in the intended position, such that the positive contact pin (4) and the negative contact pin (5) have to be arranged in the intended position.

10. Electrical plug connector (1) according to any of the previous claims, whereby the mating interface (3) is reinforced by a reinforcing insert (27), wherein the reinforcing insert (27) is a metal insert or steel insert.

11. Electrical plug connector (1) according to any of the previous claims, whereby the positive contact pin (4) and/or the negative contact pin (5) is/are crimped and/or welded or soldered to a positive conductor of the charging cable and a negative conductor of a charging cable, respectively.

12. Electrical plug connector (1) according to any of the previous claims, whereby the positive contact pin (4) and/or the negative contact pin (5) comprise/comprises a low-friction Ag-graphite composite coating.

13. Electrical plug connector (1) according to any of the previous claims, whereby the positive contact pin (4) and/or the negative contact pin (5) comprises/comprise pockets for thermocouples (28), pockets for contact springs close to tips of the concerning contact pin and/or stress relief openings at joints between different contact pins (4, 5) and/or cooling channels for receiving a coolant fluid from the charging cable.

14. Method for assembling an electrical plug connector (1), in particular an electrical plug connector (1) according to one of the preceding claims,
wherein in a first step a contact pin (4, 5) for connection with a conductor of a charging cable is inserted into a contact pin insert (6) for supporting the contact pin (4, 5) and is secured in position by the contact pin insert (6),
wherein in a following step the contact pin insert (6) with the contact pin (4, 5) supported and secured in position therein is inserted into the mating interface structure (3), and
wherein in further following step the mating interface structure (3) with the contact pin insert (6) and the contact pin (4, 5) is inserted into a connector housing (2),
such that the mating interface structure (3) supported and positioned within the connector housing (2).

15. Method according to the previous method claim, whereby the contact pin insert (6) is secured in position within the mating interface (3) by an abutment (7) with the connector housing (2).

## Patentansprüche

1. Elektrischer Steckverbinder (1) zum Laden von Elektrofahrzeugen, umfassend:
ein Steckergehäuse (2),
eine passende Schnittstellenstruktur (3), gelagert und positioniert innerhalb des Steckergehäuses (2),
einen positiven Kontaktstift (4) zur Verbindung mit einem Positivleiter eines Ladekabels und einen negativen Kontaktstift (5) zur Verbindung mit einem Negativleiter des Ladekabels,
und einen Kontaktstifteinsatz (6), der den positiven Kontaktstift (4) und/oder den negativen Kontaktstift (5) trägt,
wobei der positive Kontaktstift (4) und/oder der negative Kontaktstift (5) durch den Kontaktstifteinsatz (6) aufgenommen und in ihrer Position gesichert werden, und
wobei der Kontaktstifteinsatz (6) innerhalb der passenden Schnittstellenstruktur (3) aufgenommen wird.

2. Elektrischer Steckverbinder (1) nach dem vorstehenden Anspruch, wobei der Kontaktstifteinsatz (6) innerhalb der Passschnittstelle (3) in seiner Position durch einen Stumpf (7) in dem Steckergehäuse (2) gesichert wird.

3. Elektrischer Steckverbinder (1) nach einem der vorstehenden Ansprüche, wobei der Kontaktstifteinsatz (6) innerhalb der Passschnittstelle (3) in seiner Position durch eine Nut (7) und Federverbindung in seiner Position gesichert wird, wobei die Nut (7) und Federverbindung direkt in dem Kontaktstifteinsatz (6) und der Passschnittstelle (3) hergestellt wird.

4. Elektrischer Steckverbinder (1) nach einem der vorstehenden Ansprüche, wobei der positive Kontaktstift (4) und/oder der negative Kontaktstift (5) innerhalb des Kontaktstifteinsatzes (6) durch Presspassung und/oder Verkleben und/oder Schnappverschluss und/oder Bajonettverschluss in ihrer Position gesichert werden.

5. Elektrischer Steckverbinder (1) nach einem der vorstehenden Ansprüche, wobei der positive Kontaktstift (4) und/oder der negative Kontaktstift (5) innerhalb des Kontaktstifteinsatzes (6) durch ein Kontaktstift-Blockierelement (8), das den Kontaktstift (4, 5) in seiner Position sperrt, in ihrer Position gesichert werden.

6. Elektrischer Steckverbinder (1) nach dem vorstehenden Anspruch, wobei der positive Kontaktstift (4) und/oder der negative Kontaktstift (5) innerhalb des Kontaktstifteinsatzes (6) durch einen Bajonettverschluss (14, 15, 16) in ihrer Position gesichert werden, der eine Kopplungs-/Entkopplungsfunktion durch Rotieren des Kontaktstifts (4, 5) relativ zu dem Kontaktstifteinsatz (6) zwischen einer gekoppelten Position und einer entkoppelten Position bereitstellt, wobei das Kontaktstift-Blockierelement (8) auf den Bajonettverschluss (14, 15, 16) in der gekoppelten Position passt, sodass eine Rotation in der entkoppelten Position gesperrt ist.

7. Elektrischer Steckverbinder (1) nach Anspruch 5 oder 6, wobei das Kontaktstift-Blockierelement (8) eine Aufnahme für ein Thermoelement (23) umfasst, die ein Anstoßen des Thermoelements (23) gegen den Kontaktstift (4, 5) ermöglicht.

8. Elektrischer Steckverbinder (1) nach einem der vorstehenden Ansprüche, wobei der Kontaktstifteinsatz (6), der positive Kontaktstift (4) und der negative Kontaktstift (5) jeweils eine Passstruktur (24) umfassen, die sicherstellt, dass der positive Kontaktstift (4) und der negative Kontaktstift (5) nicht verwechselt werden können und dass sie mit dem Kontaktstifteinsatz (6) in der vorgesehenen Position zusammengesetzt werden müssen.

9. Elektrischer Steckverbinder (1) nach einem der vorstehenden Ansprüche, wobei die Passschnittstelle (3) und der Kontaktstifteinsatz (6) jeweils eine Passstruktur (25, 26) umfassen, die sicherstellt, dass der Kontaktstifteinsatz (6) mit dem passenden Einsatz (3) in der vorgesehenen Position zusammengesetzt werden muss, sodass der positive Kontaktstift (4) und der negative Kontaktstift (5) in der vorgesehenen Position angeordnet werden müssen.

10. Elektrischer Steckverbinder (1) nach einem der vorstehenden Ansprüche, wobei die Passschnittstelle (3) durch einen Verstärkungseinsatz (27) verstärkt wird, wobei der Verstärkungseinsatz (27) ein Metalleinsatz oder Stahleinsatz ist.

11. Elektrischer Steckverbinder (1) nach einem der vorstehenden Ansprüche, wobei der positive Kontaktstift (4) und/oder der negative Kontaktstift (5) gefalzt und/oder mit einem Positivleiter des Ladekabels bzw. einem Negativleiter eines Ladekabels verschweißt oder verlötet sind.

12. Elektrischer Steckverbinder (1) nach einem der vorstehenden Ansprüche, wobei der positive Kontaktstift (4) und/oder der negative Kontaktstift (5) eine reibungsarme Ag-Graphit-Verbundbeschichtung umfassen.

13. Elektrischer Steckverbinder (1) nach einem der vorstehenden Ansprüche, wobei der positive Kontaktstift (4) und/oder der negative Kontaktstift (5) aufweisen: Taschen für Thermoelemente (28), Taschen für Kontaktfedern in der Nähe der Spitzen des betreffenden Kontaktstifts und/oder Entlastungsöffnungen an Gelenken zwischen unterschiedlichen Kontaktstiften (4, 5) und/oder Kühlkanäle zum Empfangen eines Kühlmittelfluids von dem Ladekabel.

14. Verfahren zum Zusammensetzen eines elektrischen Steckverbinders (1), insbesondere eines elektrischen Steckverbinders (1) nach einem der vorstehenden Ansprüche,
wobei in einem ersten Schritt ein Kontaktstift (4, 5) zur Verbindung mit einem Leiter eines Ladekabels in einen Kontaktstifteinsatz (6) zum Tragen des Kontaktstifts (4, 5) eingesetzt und durch den Kontaktstifteinsatz (6) in seiner Position gesichert wird,
wobei in einem nachfolgenden Schritt der Kontaktstifteinsatz (6) mit dem darin getragenen und in seiner Position gesicherten Kontaktstift (4, 5) in die passende Schnittstellenstruktur (3) eingesetzt wird, und
wobei in einem weiteren nachfolgenden Schritt die passende Schnittstellenstruktur (3) mit dem Kontaktstifteinsatz (6) und dem Kontaktstift (4, 5) in ein Steckergehäuse (2) eingesetzt wird,
sodass die passende Schnittstellenstruktur (3) in dem Steckergehäuse (2) getragen und positioniert wird.

15. Verfahren nach dem vorstehenden Verfahrensanspruch, wobei der Kontaktstifteinsatz (6) innerhalb der Passschnittstelle (3) durch einen Stumpf (7) in seiner Position mit dem Steckergehäuse (2) gesichert wird.

## Revendications

1. Connecteur mâle électrique (1) pour recharger un véhicule électrique, comprenant :
un boîtier de connecteur (2),
une structure interface homologue (3) supportée et positionnée à l'intérieur du boîtier de connecteur (2),
une broche de contact positive (4) destinée à être connectée à un conducteur positif d'un câble de recharge et une broche de contact négative (5) destinée à être connectée à un conducteur négatif du câble de recharge, et
une garniture de broche de contact (6) supportant la broche de contact positive (4) et/ou la broche de contact négative (5),
la broche de contact positive (4) et/ou la broche de contact négative (5) étant reçues et fixées en position par la garniture de broche de contact (6), et
la garniture de broche de contact (6) étant reçue à l'intérieur de la structure interface homologue (3).

2. Connecteur mâle électrique (1) selon la revendication précédente, dans lequel la garniture de broche de contact (6) est fixée en position à l'intérieur de l'interface homologue (3) par une butée (7) avec le boîtier de connecteur (2).

3. Connecteur mâle électrique (1) selon l'une quelconque des revendications précédentes, dans lequel la garniture de broche de contact (6) est fixée en position à l'intérieur de l'interface homologue (3) par un joint à rainure et languette (7), ledit joint à rainure et languette (7) étant formé directement dans la garniture de broche de contact (6) et l'interface homologue (3).

4. Connecteur mâle électrique (1) selon l'une quelconque des revendications précédentes, dans lequel la broche de contact positive (4) et/ou la broche de contact négative (5) sont fixées en position à l'intérieur de la garniture de broche de contact (6) par un ajustement serré et/ou par collage et/ou par une connexion par encliquetage et/ou par un accouplement à baïonnette.

5. Connecteur mâle électrique (1) selon l'une quelconque des revendications précédentes, dans lequel la broche de contact positive (4) et/ou la broche de contact négative (5) sont fixées en position à l'intérieur de la garniture de broche de contact (6) par un élément de blocage de broche de contact (8), qui bloque la broche de contact (4, 5) en position.

6. Connecteur mâle électrique (1) selon la revendication précédente, dans lequel la broche de contact positive (4) et/ou la broche de contact négative (5) sont fixées en position à l'intérieur de la garniture de broche de contact (6) par un accouplement à baïonnette (14, 15, 16) qui assure une fonction d'accouplement-désaccouplement en faisant tourner la broche de contact (4, 5) par rapport à la garniture de broche de contact (6) entre une position accouplée et une position désaccouplée, l'élément de blocage de broche de contact (8) correspondant à l'accouplement à baïonnette (14, 15, 16) dans la position accouplée de sorte qu'une rotation dans la position désaccouplée soit bloquée.

7. Connecteur mâle électrique (1) selon la revendication 5 ou 6, dans lequel l'élément de blocage de broche de contact (8) comprend une réception pour un thermocouple (23) permettant une mise en butée du thermocouple (23) avec la broche de contact (4, 5).

8. Connecteur mâle électrique (1) selon l'une quelconque des revendications précédentes, dans lequel la garniture de broche de contact (6), la broche de contact positive (4) et la broche de contact négative (5) comprennent chacune une structure homologue (24) garantissant que la broche de contact positive (4) et la broche de contact négative (5) ne puissent pas être confondues et doivent être assemblées avec la garniture de broche de contact (6) dans la position prévue.

9. Connecteur mâle électrique (1) selon l'une quelconque des revendications précédentes, dans lequel l'interface homologue (3) et la garniture de broche de contact (6) comprennent chacune une structure homologue (25, 26) garantissant que la garniture de broche de contact (6) doive être assemblée avec l'interface homologue (3) dans la position prévue, de sorte que la broche de contact positive (4) et la broche de contact négative (5) doivent être agencées dans la position prévue.

10. Connecteur mâle électrique (1) selon l'une quelconque des revendications précédentes, dans lequel l'interface homologue (3) est renforcée par une garniture de renfort (27), la garniture de renfort (27) étant une garniture métallique ou une garniture en acier.

11. Connecteur mâle électrique (1) selon l'une quelconque des revendications précédentes, dans lequel la broche de contact positive (4) et/ou la broche de contact négative (5) sont respectivement serties et/ou soudées à un conducteur positif du câble de recharge et à un conducteur négatif du câble de charge.

12. Connecteur mâle électrique (1) selon l'une quelconque des revendications précédentes, dans lequel la broche de contact positive (4) et/ou la broche de contact négative (5) comprennent un revêtement composite Ag-graphite à faible friction.

13. Connecteur mâle électrique (1) selon l'une quelconque des revendications précédentes, dans lequel la broche de contact positive (4) et/ou la broche de contact négative (5) comprennent des logements pour thermocouples (28), des logements pour ressorts de contact à proximité de pointes de la broche de contact concernée et/ou des ouvertures de détente au niveau de joints entre les différentes broches de contact (4, 5) et/ou des canaux de refroidissement pour recevoir un fluide de refroidissement en provenance du câble de recharge.

14. Procédé d'assemblage d'un connecteur mâle électrique (1), en particulier d'un connecteur mâle électrique (1) selon l'une des revendications précédentes,
dans lequel, au cours d'une première étape, une broche de contact (4, 5) destinée à être connectée à un conducteur d'un câble de recharge est insérée dans une garniture de broche de contact (6) destinée à supporter la broche de contact (4, 5) et est fixée en position par la garniture de broche de contact (6),
dans lequel, au cours d'une étape suivante, la garniture de broche de contact (6), avec la broche de contact (4, 5) supportée et fixée en position dans celle-ci, est insérée dans la structure interface homologue (3), et
dans lequel, au cours d'une étape suivante, la structure interface homologue (3), avec la garniture de broche de contact (6) et la broche de contact (4, 5), est insérée dans un boîtier de connecteur (2),
de sorte que la structure interface homologue (3) soit supportée et positionnée à l'intérieur du boîtier de connecteur (2).

15. Procédé selon la revendication de procédé précédente, dans lequel la garniture de broche de contact (6) est fixée en position à l'intérieur de l'interface homologue (3) par une butée (7) avec le boîtier de connecteur (2).
